(19) Europäisches Patentamt
European Patent Office
Office européen des brevets

(11) EP 2 138 299 A2

(12) **EUROPÄISCHE PATENTANMELDUNG**

(43) Veröffentlichungstag:
**30.12.2009 Patentblatt 2009/53**

(21) Anmeldenummer: **09008172.0**

(22) Anmeldetag: **22.06.2009**

(51) Int Cl.:
*B29C 67/20* (2006.01)    *B29C 44/12* (2006.01)
*B29C 44/04* (2006.01)

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **25.06.2008 DE 102008029741**

(71) Anmelder: **Berleburger Schaumstoffwerk GmbH**
**57319 Bad Berleburg (DE)**

(72) Erfinder: **Pöppel, Rainer**
**57319 Bad Berleburg (DE)**

(74) Vertreter: **Gudat, Axel**
**Lippert, Stachow & Partner**
**Frankenforster Strasse 135-137**
**51427 Bergisch Gladbach (DE)**

(54) **Verfahren zur Herstellung von Hochleistungsschaumstoffkörpern, Hochleistungsschaumstoffkörper und deren Verwendung**

(57) Die Erfindung betrifft ein Verfahren zur Herstellung von Schaumstoffkörpern, wobei ein homogener Primärschaumstoffkörper unter Bildung einer sortenreinen Fraktion zu Schaumstoffflocken zerkleinert wird, die Flocken einer aus dem Primärschaumstoffkörper erhaltenen sortenreinen Fraktion mit einem Klebemittel vermengt werden, das Klebemittel unter Erzeugung eines Sekundärschaumstoffkörpers zum Abbinden gebracht wird, und wobei gegebenenfalls der Sekundärschaumstoffkörper unter Bildung von Schaumstoffartikeln zerteilt wird. Weiterhin betrifft die Erfindung ein Verfahren zur Herstellung von Schaumstoffkörpern, wobei mehrere jeweils homogene Primärschaumstofflcörper $n_1$ bis $n_x$ mit unterschiedlichen physikalischen Eigenschaften getrennt voneinander unter Bildung einer Anzahl $n_x$ sortenreiner Fraktionen F1 bis Fx zu Schaumstoffflocken zerkleinert werden, wobei die Flocken unterschiedlicher Fraktionen F1 bis Fx in einem vordefinierten Verhältnis miteinander zu einer gleichmäßigen Mischfraktion vermischt werden, wobei die Flocken der Mischfraktion mit einem Klebemittel vermengt und das Klebemittel unter Erzeugung eines Sekundärschaumstoffkörpers zum Abbinden gebracht wird, und wobei gegebenenfalls der Sekundärschaumstoffkörper unter Bildung von Schaumstoffartikeln zerteilt wird. Die Sekundärschaumstoffkörper sind als Gebäudeentkopplungselement, als Transportwegeunterbaudämpfungselement oder als Maschinenunterbaudämpfungselement verwendbar.

Fig. 1

Vergleich Eigenfrequenzverläufe / Lastbereiche

EP 2 138 299 A2

**Beschreibung**

Die Erfindung betrifft ein Verfahren zur Herstellung von Hochleistungsschaumstoffkörpern, welche bevorzugt als Dämpfungselemente für technische Anwendungen einsetzbar sind. Weiterhin betrifft die Erfindung nach dem Verfahren hergestellte Schaumstoffkörper oder Schaumstoffartikel und deren Verwendung als Dämpfungselemente.

Schaumstoffkörper werden für viele Anwendungszwecke eingesetzt, insbesondere als technische Dämpfungselemente, beispielsweise im Bereich der Gebäudeentkoppelung, im Transportwesen insbesondere als Dämpfungselemente im Transportwegeunterbau wie z. B. für Schienenverkehrswege oder als Maschinendämpfungselemente zur Dämpfung von Maschinenteilen oder als Teile des Unterbaus von Maschinen oder Vorrichtungen mit beweglichen Teilen, um diese von dem Untergrund oder der Umgebung schwingungstechnisch entkoppeln zu können.

Derartige Schaumstoffkörper, auf welche sich insbesondere auch die Erfindung bezieht, stellen somit Hochleistungsschaumstoffkörper dar, die sehr genau definierte schwingungstechnische Eigenschaften wie ein sehr genau definiertes Dämpfungsverhalten bei unterschiedlichen Lasten, Frequenzen oder vorgegebenen Frequenzbereichen aufweisen müssen. Weiterhin müssen derartige Schaumstoffkörper auch sehr genau definierte Kompressionseigenschaften und Körperschalldämpfungseigenschaften aufweisen. Ferner müssen Hochleistungsschaumstoffkörper für Dämpfungselemente eine hohe dynamische Belastbarkeit und Haltbarkeit sowie ein gutes Kriechverhalten bei sehr geringen Ermüdungserscheinungen auch über längere Zeiträume und unter dynamischer Belastung aufweisen und zudem sehr geringe Eigenfrequenzen haben. Derartige Schaumstoffkörper und -artikel werden im Folgenden im Sinne der Erfindung als "Hochleistungsschaumstoffkörper" bzw. "Hochleistungsschaumstoffartikel" bezeichnet und unterscheiden sich somit grundlegend von Schaumstoffkörpern für Verpackungsmaterialien, die abgesehen von einer Raumausfüllung und einer gewissen mechanischen Grundstabilität keine besonderen Anforderungen erfüllen müssen.

Derartige Hochleistungsschaumstoffkörper bzw. -artikel werden bisher durch Extrusion von Kunststoffschaum, insbesondere Polyurethanschaum, oder durch Ausschäumen entsprechender Hohlformen hergestellt. Prinzipiell können für viele Anwendungsfälle derartige Schaumstoffkörper mit relativ engen Toleranzen auch hinsichtlich ihrer dynamischen Eigenschaften und Kompressibilität hergestellt werden, um hierdurch auch einen störungsfreien und exakten Betrieb der entsprechenden Maschinen über lange Zeiträume und entsprechend lange Wartungsintervalle zu gewährleisten. Dies gilt insbesondere bei heutigen Hochleistungsmaschinen, die auch für die Maschinendämpfung sehr enge Toleranzen fordern. Allerdings sind die erzielbaren Toleranzen der Schaumstoffkörper insbesondere hinsichtlich ihrer dynamischen Eigenschaften und Kompressibilität immer noch deutlich, so dass es wünschenswert ist, diese weiter zu verringern, nach Möglichkeit in Richtung auf Toleranzen von gegen Null. Ferner können die bisher bekannten Schaumstoffkörper und -artikel nur in einer begrenzten Anzahl definierter Abmessungen und in einer begrenzten Anzahl unterschiedlicher Qualitäten hergestellt werden. So werden üblicherweise von Herstellern derartiger Hochleistungsschaumstoffkörper bis zu 6-8 unterschiedliche Qualitäten, z.B. unterschiedliche Raumgewichte oder Kompressibilitäten in jeweils 2 unterschiedlichen Materialstärken angeboten. Unter Berücksichtigung des logistischen Aufwandes stellt dies bereits eine gewisse Obergrenze dar, auch wenn hierdurch nicht annähernd alle Anwendungsfälle abgedeckt werden können. Sind für andere Anwendungsfälle jedoch sehr genau definierte physikalische Eigenschaften (insbesondere dynamische Eigenschaften) gefordert, so müssen hier Kompromisse eingegangen werden. Entsprechendes gilt dann, wenn die jeweiligen Hochleistungsschaumstoffkörper bzw. - artikel nur in gewissen Abmessungen zur Verfügung stehen. Es sind dann anderweitige bauliche Änderungen erforderlich, die mit entsprechenden konstruktiven Nachteilen oder erhöhtem Aufwand verbunden sind, oder aber es müssen mehrere vorgefertigte Schaumstoffkörper miteinander beispielsweise durch Verkleben zu einem Körper der entsprechenden Abmessungen und/oder physikalischen Eigenschaften verbunden werden. Dies stellt jedoch einen zusätzlichen Aufwand dar und ist ferner baustellenseits auch aufgrund ungenügender Prozesskontrolle unakzeptabel. Schließlich werden durch diese Verklebungen auch die physikalischen Eigenschaften des Dämpfungssystems als solchem, insbesondere die dynamischen Eigenschaften, auf nicht genau vorhersehbare Weise beeinflusst, was ebenfalls unerwünscht ist. Entsprechendes gilt, wenn zur Erzeugung eines Schwingungskörpers aus unterschiedlichen Lagen mit unterschiedlichen Schwingungseigenschaften ein Gesamtkörper erzeugt wird.

Der Erfindung liegt daher die Aufgabe zugrunde, Hochleistungsschaumstoffkörper und - artikel, insbesondere zur Verwendung als Dämpfungselemente, herzustellen, die den jeweiligen Anforderungen auf einfache Weise möglichst optimal anpassbar sind und die genau definierte dynamische Eigenschaften in möglichst engen Toleranzbereichen haben.

Überraschenderweise kann diese Aufgabe dadurch gelöst werden, dass zur Herstellung der Hochleistungsschaumstoffkörper bzw. -artikel ein homogener Primärschaumstoffkörper unter Bildung einer sortenreinen Fraktion zu Schaumstoffflocken zerkleinert wird, dass anschließend die Flocken einer aus dem Primärschaumstoffkörper erhaltenen sortenreinen Fraktion mit einem Klebemittel vermengt werden, dass das Klebemittel unter Erzeugung eines Sekundärschaumstoffkörpers zum Abbinden gebracht wird und dass gegebenenfalls anschließend der Sekundärschaumstoffkörper unter Bildung von Schaumstoffartikeln auf die gewünschten Maße weiter zugeschnitten wird. Hierdurch ist es möglich, auf einfache Weise Hochleistungsschaumstoffkörper und -artikel herzustellen, die genau definierte dynamische Eigenschaften aufweisen und zudem auch in praktisch beliebigen Dimensionen und Geometrien und/oder Verdichtungen herstellbar sind. Aufgrund der Zerteilung der Primärschaumstoffkörper in Flocken ist der resultierende Sekundärschaumstoffkörper bzw. der aus diesem hergestellte Artikel praktisch homogen, da die Flocken einen sehr viel geringeren Durchmesser als der hergestellte Sekundärschaumstoffkörper bzw. -artikel aufweisen. Überraschenderweise sind derartige Schaumkörper auch mit wesentlich engeren Toleranzen, die bei geeigneter Prozessführung bis praktisch auf Null reduzierbar sind, herstellbar, insbesondere auch hinsichtlich der Toleranzen der dynamischen Eigenschaften, der Federkonstanten, der Kompressibilität und/oder des Raumgewichtes, als bisherige Primärschaumkörper. Dies betrifft sowohl die Toleranzen innerhalb einer Charge als insbesondere auch die örtlichen Abweichungen der physikalischen Eigenschaften innerhalb eines Schaumstoffkörpers.

Überraschenderweise können somit Hochleistungsschaumstoffkörper mit äußerst stark reduzierten Toleranzen, bei geeigneter Prozessführung praktisch ohne signifikante Toleranzen, dadurch hergestellt werden, dass an sich bereits für den jeweiligen Anwendungsfall einsetzbare Schaumstoffkörper zerflockt werden und die Flocken erneut durch Binde- bzw. Klebemittel zu einem neuen Sekundärschaumstoffkörper verbunden werden.

Es ist nachgewiesen, dass durch das erfindungsgemäße Verfahren beim Schäumungsvorgang und/oder beim Erkalten bzw. Aushärten des Schaums auftretende Inhomogenitäten und Gradienten, die anscheinend zu größeren Toleranzen führen, durch die Zerteilung der Primärschaumstoffkörper und vorzugsweise weitest mögliche Homogenisierung der Flocken vermieden werden können. Da im Gegensatz zu bisher bekannten Verfahren erfindungsgemäß bereits von Primärschaumstoffkörpern ausgegangen wird, treten derartige Schwankungen der Eigenschaften dann praktisch nicht mehr oder nur noch in einem sehr untergeordneten Ausmaß auf. Die einzelnen zusätzlichen Prozessschritte, die nicht die Herstellung der Primärschaumstoffkörper betreffen, sind besonders exakt kontrollier- und steuerbar. Zudem sind die Schaumstoffkörper maßgenauer herstellbar. Dies führt zu einem ruhigeren und gleichmäßigerem Betrieb der Maschinen und Anlagen und zudem zu neuen Anwendungsgebieten. Weiterhin kann der Sekundärschaumstoffkörper einfacher den jeweiligen Anforderungen angepasst werden.

Vorzugsweise erfolgt hierbei die Vermengung und Abbindung des Klebemittels derart, dass bei einer Vorlastpressung des Sekundärschaumstoffkörpers von 0,005 - 0,8 N/mm$^2$, vorzugsweise im Bereich von 0,0075 - 0,25 N/mm$^2$ oder 0,01 - 0,05 N/mm$^2$, die Eigenfrequenz des Systems aus Vorlast und Sekundärschaumstoffkörper unter Referenzbedingungen kleiner ist als die Eigenfrequenz des Systems mit dem einen Primärschaumstoffmaterial, welches den Sekundärschaumstoffkörper bildet. Hiermit umfasst ist die entsprechende Auswahl und Dosierung des Klebemittels und die Steuerung des Abbindevorganges, insbesondere einschließlich des unten beschriebenen Pressvorganges während des Abbindens.

Weiterhin kann überraschenderweise die Aufgabe dadurch gelöst werden, dass mehrere jeweils homogene Primärschaumstoffkörper $n_1$ bis $n_x$ mit jeweils unterschiedlichen und vorzugsweise vorbekannten physikalischen Eigenschaften getrennt voneinander unter Bildung einer Anzahl $n_x$ sortenreiner Fraktionen $f_1$ bis $f_x$, die jeweils aus einem unterschiedlichen Primärschaumstoffkörpermaterial erzeugt sind, zu Schaumstoffflocken zerkleinert werden. Anschließend werden die Flocken unterschiedlicher Fraktionen $f_1$ bis $f_x$ in einem vordefinierten Verhältnis (z.B. Volumen- oder Gewichtsverhältnis) miteinander zu einer möglichst gleichmäßigen Mischfraktion vermischt. Die Mischfraktion kann dann mit einem Klebemittel vermengt und dieses unter Erzeugung eines Sekundärschaumstoffkörpers zum Abbinden gebracht werden. Vorzugsweise erfolgt die Vermengung und das Abbinden derart, dass bei einer Vorlastpressung des Sekundärschaumstoffkörpers von 0,005 - 0,8 N/mm$^2$, vorzugsweise im Bereich von 0,0075 - 0,25 N/mm$^2$ oder 0,01 - 0,05 N/mm$^2$, die Eigenfrequenz des Systems aus Vorlast und Sekundärschaumstoffkörper unter Referenzbedingungen kleiner ist als die Eigenfrequenz des Systems mit Primärschaumstoffkörpern n1, aus denen die Fraktion F1 erzeugt wird, wobei die Fraktionen F1 bis Fx mit zunehmendem Index x in zunehmend geringerem Volumen- und/oder Gewichtsanteil in dem Sekundärschaumstoffkörper enthalten sind. Hiermit umfasst ist die entsprechende Auswahl und Dosierung des Klebemittels und Steuerung des Abbindevorganges, insbesondere einschließlich des unten beschriebenen Pressvorganges während des Abbindens, was auch allgemein für die weiteren unten beschriebenen Abwandlungen der Sekundärschaumstoffkörper gilt. Die Fraktion F1 kann in einem Anteil von ≥ 20-25%, vorzugsweise 30-50% oder ≥ 70-80% oder ≥ 90-95% (jeweils Gew.-% oder Vol.-%) des Sekundärschaumstoffkörpers vorliegen.

Gegebenenfalls kann ein derart hergestellter Sekundärschaumstoffkörper unter Bildung von Schaumstoffartikeln auf besondere Zuschnittmaße zugeschnitten werden. Durch dieses Verfahren können überraschenderweise Sekundärschaumstoffkörper sehr exakter Dimensionierung mit sehr exakt definierten physikalischen und insbesondere dynamischen Eigenschaften, Federkonstante und Raumgewicht bzw. Dichte hergestellt werden. So können die Schaumstoffflocken aus zuvor genau definierten Primärschaumstoffkörpern mit vorzugsweise bekannten physikalischen Eigenschaften gewonnen und die Homogenität der sortenreinen Fraktionen genau überwacht werden, so dass auch hier nach Verbindung der Flocken unterschiedlicher Fraktionen durch das Klebemittel Hochleistungssekundärschaumstoffkörper mit äußerst engen Toleranzen, die praktisch nicht mehr signifikant sind oder gegen Null gehen können, herstellbar sind, insbesondere hinsichtlich der Dimensionen und physikalischer Eigenschaften wie dynamischen Eigenschaften, Federkonstanten und Raumgewicht. Auf die vorherigen Ausführungen zu der Alternative nach Anspruch 1 wird hiermit Bezug genommen. Wie auch zu der ersten erfindungsgemäßen Alternative weist der Sekundärschaum zudem ein verbessertes Kriechverhalten auf und weist in zumindest einem Teil des anwendungstechnisch relevanten Frequenzbereichs verbesserte (insbes. niedrigere) Eigenfrequenzen auf. Durch das erfindungsgemäße Verfahren sind insbesondere die Eigenfrequenzen der Schaumstoffkörper unter Vorlast als dynamische Eigenschaften einerseits und statische Eigenschaften, die die Dauerlastbeständigkeit und Tragfähigkeit der Schaumstoffkörper mitbestimmen, gegenüber den eingesetzten Primärschaumstoffkörpern optimierbar. Die Toleranzen der Sekundärschaumstoffkörper sind ferner geringer als bei den eingesetzten Primärschaumstoffkörpern, sowohl innerhalb einer Charge als auch innerhalb eines einzelnen Schaumstoffkörpers. Durch die Auswahl der Einzelfraktionen und die Mischungsverhältnisse sind mit geringem Aufwand die physikalischen Eigenschaften der Sekundärschaumstoffkörper sehr genau an die jeweiligen Einzelfallerfordernisse anpassbar. Diese Vorteile bestehen insbesondere auch gegenüber Verfahren, bei welchen durch gleichzeitige Verschäumung unterschiedlicher Schaumstoffkomponenten die physikalischen Eigenschaften des Endproduktes eingestellt werden sollen. Da der Schäumungsvorgang nicht immer mit der erforderlichen Genauigkeit kontrolliert werden kann, sei es aufgrund der Zudosierung eines Schäumungsgases und Toleranzen beim Schäumungsdruck, der Dosierung unterschiedlicher Schaumstoffkomponenten, Ungleichmäßigkeiten bei der Ausfüllung der Hohlform mit Schaum oder dergleichen, sind durch das erfindungsgemäße Verfahren Hochleistungsschaumstoffkörper mit sehr viel geringeren Toleranzen aber auch mit gegenüber den ursprünglichen Primärschaumstoffkörpern optimierten Eigenschaften herstellbar. Weiterhin ist das erfindungsgemäße Verfahren flexibler, wenn Schaumstoffkörper unterschiedlicher physikalischer Eigenschaften nacheinander herzustellen sind.

Allgemein beziehen sich im Rahmen der Erfindung die Ausführungen zu der Eigenfrequenz auf die Eigenfrequenz des jeweiligen elastischen Lagers bzw. einer elastischen Bettung, d.h. eines Systems aus dem eine elastische Lagerung bewirkenden Schaumstoffkörper und eines gelagerten Körpers, welcher eine Pressung bzw. Vorlast auf den elastischen Schaumstoffkörper ausübt. Die ausgeübte Vorlastpressung im Bereich von 0,005 bis 0,8 N/mm², insbesondere im Bereich von 0,0075 bis 0,25 N/mm² oder 0,01 bis 0,05 N/mm², kann sich jeweils auf Werte von 0,02 N/mm² oder 0,05 N/mm² oder 0,1 N/mm² oder 0,25 N/mm² beziehen. Der das elastische Lager bildende Schaumstoffkörper kann jeweils in einer Dicke von 12mm vorliegen, bei Vorlage anderer oder größerer Dicken, kann auf die genannte Referenzdicke zurückgerechnet werden oder eine entsprechend dimensionierte Probe eines Prüfkörpers herausgeschnitten werden. Die genannten Angaben beziehen sich jeweils auf einen Prüfkörper mit den Abmessungen 300mm x 300mm x 12mm. Die oben genannten Vorlastpressungen stellen statische Druckvorlasten dar. Die Eigenfrequenzen der elastischen Lager (umfassend jeweils den Schaumstoffkörper und die Vorlast) können kraftgeregelt mit einer Amplitude von 0,25mm im Frequenzbereich von 2 bis 50 Hz ermittelt werden. Anschließend kann die Eigenfrequenz einer elastischen Bettung mit der Masse M berechnet werden, welche durch die jeweilige Druckbelastung $\sigma_d$ repräsentiert wird. Die Bestimmung der Eigenfrequenz kann jeweils nach DIN 53513 erfolgen. Die obigen Bedingungen können jeweils als Referenzbedingungen im Rahmen der Erfindung gelten, insbesondere bei einer Vorlast von 0,02 N/mm² oder 0,1 N/mm².

Allgemein ergibt sich somit die Eigenfrequenz $f_0$ der elastischen Bettung bzw. des elastischen Lagers aus Schaumstoffkörper und Vorlastkörper rechnerisch aus der von Vorlast und Belastungsfrequenz abhängigen dynamischen Steifigkeit. Die Eigenfrequenz berechnet sich hierbei aus $f_0 = \dfrac{1}{2\pi}\sqrt{\dfrac{c(m,f)}{m}}$ . Die dynamische Steifigkeit ist somit eine Funktion der Frequenz f und der Vorlast, d. h. der Masse M, die jeweils auf eine Einheitsfläche wie beispielsweise 1mm² oder 1m² bezogen sein kann. Um die Frequenzabhängigkeit der Steifigkeit genügend zu berücksichtigen, wird für jede Vorlaststufe eine lineare Approximation der dynamischen Steifigkeit über einem logarithmischen Frequenzmaßstab vorgenommen. Mit einer solchen Beschreibung ist die iterative Lösung (i = 0,1,2...) der oben genannten Gleichung möglich. Hierbei wird ausgegangen von einem geschätzten Startwert für die Eigenfrequenz $f_{0\,0}$:

$$f_{0i+1} = \frac{1}{2\pi}\sqrt{\frac{c(m,f_{0i})}{m}}$$

Die Bestimmung der frequenz- und amplitudenabhängigen Steifigkeit und Dämpfung erfolgt im Rahmen der Erfindung bei erzwungenen Schwingungen außerhalb der Resonanz nach DIN 53513. Hierbei wird stufenweise (jeweils 10% der Maximallast) kraftgesteuert eine Vorlast eingestellt. Danach wird in diesem durch die Vorlast bestimmten Arbeitspunkt in Wegregelung eine Schwingungsamplitude von 0,25mm aufgeprägt. Dieser Versuch wird bei den Frequenzen 5 Hz, 10 Hz und 40 Hz durchgeführt. Hierbei werden jeweils 5 Hysteresen mit 100 Messwerten je Hysterese abgetastet und aufgezeichnet. Dies kann allgemein im Rahmen der Erfindung gelten.

Überraschenderweise können somit die nach dem erfindungsgemäßen Verfahren hergestellten Schaumkörper unter den oben beschriebenen Bedingungen unter Vorlast Eigenfrequenzen aufweisen, welche niedriger als die Eigenfrequenzen der Primärschaumstoffkörper sind, aus welchen die jeweiligen Sekundärschaumstoffkörper hergestellt sind.

Durch das erfindungsgemäße Verfahren lassen sich somit auch Schaumstofflager mit niedrigeren Eigenfrequenzen erzeugen als durch einen Lagenaufbau, bei welchem mehrere Primärschaumstoffkörper unterschiedlichen Materials lagenweise übereinander angeordnet sind (die Lagen können hierbei flächig miteinander verklebt sein), wobei die Materialien und deren Gewichtsverhältnisse in beiden Anordnungen einander entsprechen. Die Eigenfrequenzen der Sekundärschaumstoffkörper können somit niedriger sein als die eines die Hauptfraktion F1 des Sekundärschaumstoffkörpers bildenden Materials n1 eines Primärschaumstoffkörpers oder geringer als die beiden Hauptfraktionen n1, n2 oder die drei Hauptfraktionen n1, n2 und n3 des Sekundärschaumstoffkörpers oder gegebenenfalls auch als sämtliche der Materialien n1 bis nx der den Sekundärschaumstoffkörper bildenden Fraktionen F1 bis Fx. Dies kann jeweils auch für das gewichtete Mittel der Eigenfrequenzen der Primärschaumstofffraktionen gelten, z. B. gewichtet nach Volumen- oder Gewichtsanteilen. Überraschenderweise können die erfindungsgemäß hergestellten Sekundärschaumstoffkörper jedoch in einem vergleichsweise hohen Dauerlastbereich eingesetzt werden, wie er bei Primärschaumstoffkörpern mit entsprechend niedrigen Eigenfrequenzen nicht gegeben wäre, da beispielsweise die Zellwände der Schaumstoffkörperzellstrukturen (die also durch den Primärschaum bestimmt werden) vergleichsweise stark sind und somit eine hohe Festigkeit aufweisen (was als solches dann bei den Primärschaumstoffkörper in unerwünschter Weise zu relativ hohen Eigenfrequenzen führen würde). Anders gesagt können bei gegebenem Dauerlastbereich der Sekundärschaumstoffkörper diese niedrigere Eigenfrequenzen unter einer gegebenen Vorlast aufweisen, als bei entsprechenden Primärschaumstoffkörpern oder bei Schaumstoffkörpern, die lagenweise aus Primärschaumstoffkörpern unterschiedlichen Materials aufgebaut sind. Für bestimmte Anwendungsfälle wie insbesondere Verwendung der Hochleistungsschaumstoffkörper als Dämpfungselemente zur Gebäudeentkopplung, als Transportwegeunterbaudämpfungselemente oder als Maschinenunterbaudämpfungselemente sind jedoch auch bei hohen Dauerlastbereichen niedrige Eigenfrequenzen von besonderer Bedeutung und bereits geringfügige Verringerungen der Eigenfrequenzen wesentlich, um diese den jeweiligen Erfordernissen optimal und praktisch stufenlos anpassen zu können.

Besonders bevorzugt erfolgt die Vermengung und Abbindung des Klebemittels, auch unter Berücksichtigung der Auswahl des Klebemittels, dessen Gewichtsanteil an dem Sekundärschaumstoffkörper und/oder der Pressung des Materials während des Abbindens des Klebemittels, derart, dass unter den oben genannten Referenzbedingungen die Eigenfrequenzen (DIN 53513) im Bereich von 5 bis 40 Hz oder 5 bis 25 Hz, vorzugsweise im Bereich von 8 bis 20 Hz liegen. Dies kann jeweils für eine Vorlast von 0,02 N/mm$^2$, 0,05 N/mm$^2$, 0,1 N/mm$^2$ oder 0,25 N/mm$^2$ gelten. Die derart hergestellten Schaumstoffkörper sind besonders bevorzugt als elastische Lager für die Gebäudeentkoppelung, Transportwegeunterbaudämpfung oder Maschinenunterbaudämpfung geeignet.

Die Vermengung und Abbindung des Klebemittels kann derart erfolgen, dass bei einer Vorlastpressung des Sekundärschaumstoffkörpers im Bereich von 0,005 - 0,8 N/mm$^2$, insbesondere im Bereich von 0,0075 - 0,25 N/mm$^2$ oder 0,01 - 0,05 N/mm$^2$ (insbesondere bei den oben genannten Einzelwerten von 0,02 N/mm$^2$, 0,05 N/mm$^2$, 0,1 N/mm$^2$ oder 0,25 N/mm$^2$) die Eigenfrequenz des Systems aus Vorlast und Sekundärschaumstoffkörpers unter Referenzbedingungen kleiner ist als die Eigenfrequenz des Systems mit Primärschaumstoffkörpern der Fraktion F1 und F2. Die Fraktionen F1 und F2 bilden somit die beiden Fraktionen mit dem höchsten Volumen- und/oder Gewichtsanteil der Gesamtheit der Fraktionen F1 bis Fx. Die Fraktion F1 und/oder die Fraktionen F1 und F2 zusammen können allgemein ≥ 30-50% oder vorzugsweise ≥ 70-80% oder besonders bevorzugt ≥ 90-95% oder praktisch 100%, jeweils in Volumen- und/ oder Gewichtsprozent, des Gesamtanteils der Schaumstoffflocken ausmachen. Die Vermengung und Abbindung des Klebemittels kann gegebenenfalls auch derart erfolgen, dass bei der genannten Vorlastpressung die genannte Eigenfrequenz des Systems aus Vorlast und Sekundärschaumstoffkörpers kleiner ist als die Eigenfrequenz des Systems mit Primärschaumstoffkörpern der Fraktion F1, F2 und F3, welche ≥ 30-50%, ≥ 70-80% oder ≥ 90-95% oder praktisch 100% (jeweils in Volumen- und/ oder Gewichtsprozent) des Gesamtanteils der Schaumstoffflocken ausmachen können, oder der Eigenfrequenz des Systems unter Berücksichtigung sämtlicher Fraktionen F1 bis Fx. (Hierbei wird jeweils von einer lagenweisen Anordnung der Primärschaumstoffkörper und gegebenenfalls mit einer flächigen Verklebung der Lagen, wobei die Verklebung die physikalischen Eigenschaften des Lagenaufbaus praktisch nicht beeinflusst, ausgegangen. Die Lagen können in der Reihenfolge mit zunehmendem Gewichts- und/oder Volumenanteil angeordnet, und die Lage mit höchstem Gewichts- und/oder Volumenanteil dem zu lagernden Bauteil zugewandt oder abgewandt angeordnet sein.) Ausgehend von bestimmten sortenreinen Flockenfraktionen kann somit durch das erfindungsgemäße Herstellungsverfahren die Eigenfrequenz des Sekundärschaumstoffkörpers gezielt eingestellt werden, auch gezielt niedriger als die der Hauptkomponente/Hauptkomponenten des Sekundärschaumstoffkörpers, wobei von den weiteren vorteilhaften statischen und/oder dynamischen Eigenschaften der Materialien der einzelnen Fraktionen Gebrauch gemacht wird. Das Vergleichssystem mit mehreren Fraktionen F1 bis Fx kann jeweils aufgebaut sein aus Lagen der jeweiligen Primärschaumstoffkörper, deren Schichtdicke zueinander sich verhält wie die jeweiligen Volumen- und/oder Gewichtsanteile der Fraktionen im Sekundärschaumstoffkörper.

Besonders bevorzugt erfolgt die erfindungsgemäße Herstellung der Sekundärschaumstoffkörper derart, dass unter der genannten Vorlastpressung des Sekundärschaumstoffkörpers im Bereich von 0,005 - 0,8 N/mm$^2$, insbesondere im Bereich von 0,0075 - 0,25 N/mm$^2$ oder 0,01 - 0,05 N/mm$^2$, die Eigenfrequenz des Systems aus Vorlast und Sekundärschaumstoffkörper unter den genannten Referenzbedingungen um zumindest 1-2 Hz (oder mehr) niedriger ist als die Eigenfrequenz des Systems aus Vorlastkörper und dem nur einen Primärschaumstoffkörper oder mit den Primärschaumstoffkörpern der Fraktionen F1 und F2, gegebenenfalls auch Primärschaumstoffkörpern der Fraktionen F1, F2 und F3 oder Primärschaumstoffkörpern aus sämtlichen Fraktionen F1 bis Fx. Die Primärschaumstoffkörper aus den Fraktionen F1 bis Fx (auch mit Fx = F2, F3 usw.) ergeben sich aus mehrlagiger Anordnung von Primärschaumstoffkörpern, die in dem Lagenaufbau einen Volumen- oder Gewichtsanteil einnehmen, wie in dem Sekundärschaumstoffkörper, wie oben beschrieben. Die Vorlastpressung kann beispielsweise die oben genannten Einzelwerte von 0,02 N/mm$^2$, 0,05 N/mm$^2$, 0,1 N/mm$^2$ oder 0,25 N/mm$^2$ annehmen. Die Verringerung der Eigenfrequenz kann hierbei ≥ 2-2,5 Hz betragen, bevorzugt ≥ 3-4 Hz oder besonders bevorzugt ≥ 5-7,5 Hz. Die Verringerung der Eigenfrequenz kann bei einer Vorlast von 0,02 N/mm$^2$ ohne weiteres bis zu 5-7 Hz oder mehr, beispielsweise bis zu 8-10 Hz oder bis zu 15 Hz oder mehr betragen, bei einer Vorlast von 0,01 N/mm$^2$ ohne weiteres 10 bis 12 Hz oder mehr betragen, beispielsweise bis zu 14 bis 16 Hz oder bis zu 18-20 Hz oder mehr, jeweils bezogen auf eine Referenzschichtdicke von 12 mm des Prüfkörpers. Entsprechende Frequenzverminderungen können auch bei einer Vorlast von 0,05 N/mm$^2$ oder 0,1 N/mm$^2$, 0,25 N/mm$^2$ oder 0,5 N/mm$^2$ auftreten. Die Eigenfrequenzen des elastischen Lagers können hierbei praktisch stufenlos den jeweiligen Erfordernissen angepasst werden, was bei herkömmlichen Elastomerlagern für die genannten bevorzugten Anwendungsfälle nicht möglich ist, bei welchen vorkonfektionierte Primärschaumstoffkörper vorgegebener Schichtdicke lagenweise übereinander angeordnet werden. Durch die besonders angepassten dynamischen Schwingungseigenschaften unter Vorlast der jeweiligen Elastomerlager können die gelagerten Bauteile oder Systeme wie Maschinen, Gebäude oder Transportwege zudem eine besonders hohe Lebensdauer aufweisen.

Besonders bevorzugt sind die Sekundärschaumstoffkörper derart hergestellt, dass die Eigenfrequenzen des Systems aus Vorlast und Sekundärschaumstoffkörper unter den oben angegebenen Referenzbedingungen ≥ 5 bis 7%, vorzugsweise ≥ 10 bis 12% oder ≥ 15 bis 20% niedriger als die Eigenfrequenz des Systems mit nur einem Primärschaumstoffkörpermaterial oder eines Systems mit den jeweils einzelnen Primärschaumstoffmaterialien der Fraktionen F1 bis Fx oder eines Systems mit lagenweise angeordneten Primärschaumstoffkörpern der Fraktionen F1 bis Fx, aus denen der Sekundärschaumstoffkörper besteht, wobei die Primärschaumstoffkörper in Volumenanteilen vorliegen, wie sie bei dem Sekundärschaumstoffkörper gegeben sind. Die Verringerung der Eigenfrequenz kann ohne weiteres bis 25-30% oder bis zu 35-40% der Eigenfrequenz des Systems mit Primärschaumstoffkörpermaterial betragen. Dies kann jeweils bei Vorlasten im Bereich von 0,005 - 0,8 N/mm$^2$, oder 0,075 - 0,25 N/mm$^2$ oder 0,01 - 0,05 N/mm$^2$, beispielsweise bei Vorlasten von 0,01 N/mm$^2$, bei 0,02 N/mm$^2$, bei 0,05 N/mm$^2$, bei 0,1 N/mm$^2$ oder bei 0,25 N/mm$^2$ gelten.

Beispielsweise können durch das erfindungsgemäße Verfahren Sekundärschaumstoffkörper hergestellt werden, welche ein Raumgewicht von 200 bis 300 kg/m$^3$, vorzugsweise 210 bis 260 kg/m$^3$ oder 220 bis 240 kg/m$^3$ aufweisen und bei einer Schichtdicke von 12 mm unter den oben genannten Referenzbedingungen (aufgeprägte Schwingungsamplitude 0,25mm; Probenkörper 300mm x 300mm x 12mm) bei einer Vorlastpressung von 0,01 N/mm$^2$ eine Eigenfrequenz von ≤ 27 bis 30 Hz, vorzugsweise ca. 25 Hz, bei einer Pressung von 0,015 N/mm$^2$ eine Eigenfrequenz von ≤ 24 bis 25 Hz, vorzugsweise ≤ 23 Hz und bei einer Vorpressung von 0,02 N/mm$^2$ eine Eigenfrequenz von ≤ 22 bis 23 Hz, vorzugsweise ≤ 20 bis 21 Hz aufweisen können. Der Sekundärschaumstoffkörper kann hierbei aus nur einer Fraktionen F1 hergestellt sein. Der eingesetzte Primärschaumstoffkörper kann ein Raumgewicht von 120 bis 180 kg/m$^3$, vorzugsweise 130 bis 170 kg/m$^3$ oder 140 bis 160 kg/m$^3$ aufweisen, beispielsweise ca. 150 kg/m$^3$, wobei bei dem Abbindevorgang des Klebemittels eine geeignete Verpressung des Schaumstoffmaterials erfolgt. Entsprechendes gilt für größere Schichtdicken des genannten Materials, wobei die Eigenfrequenzen auf eine Schichtdicke von 12mm berechnet wird oder Proben entsprechender Schichtdicke aus dem Schaumstoffmaterial präpariert werden. Die Eigenfrequenzen des Sekundärschaumstoffkörpers können um mehr als 2-3 Hz oder mehr als 5Hz unterhalb der Eigenfrequenzen des Sekundärschaumstoffkörpers liegen.

Die erfindungsgemäß hergestellten Sekundärschaumstoffkörper, insbesondere in Verwendung als Dämpfungselement zur Gebäudeentkoppelung, Transportwegeunterbaudämpfung oder Maschinenunterbaudämpfung können vorzugsweise in einem Dauerlastbereich von bis zu 35 T/m$^2$ (Tonne je qm) als statischer Dauerbelastung eingesetzt werden. Besonders bevorzugt sind die erfindungsgemäßen Schaumstoffkörper derart hergestellt, dass sie in einem statischen Dauerlastbereich von 0,2 bis 80 T/ m$^2$ oder 0,5 bis 20 T/ m$^2$, vorzugsweise 0,75 bis 15 T/ m$^2$, besonders bevorzugt im Bereich von 1 bis 10 T/ m$^2$ einsetzbar sind. Die statische Dauerlast kann im Wesentlichen der bei der Eigenfrequenzbestimmung eingesetzten Vorlast entsprechen.

Der Dauerlastbereich kann beispielsweise dadurch definiert sein, dass bei einer Dauerbelastung von zwei Monaten oder länger sich einer oder mehrere der Parameter ausgewählt aus der Gruppe von Bruchspannung, Bruchdehnung, Weiterreißfestigkeit, Druckverformungsrest und statischem und dynamischem Schubmodul um nicht mehr als 20-30% oder bis 40-50% ändert, vorzugsweise über einen Zeitraum von bis zu sechs Monaten oder länger, besonders bevorzugt über einen Zeitraum von bis zu ein bis zwei Jahren. Über diese Zeitdauer ändern sich eine oder mehrere der genannten Parameter vorzugsweise um nicht mehr als 15%, besonders bevorzugt um nicht mehr als 10%. Die den Dauerlastbereich angebenden Parameter können insbesondere das statische Schubmodul und/oder der Druckverformungsrest sein. Gegebenenfalls können der eine oder mehrere der Parameter auch die Weiterreißfestigkeit und/oder die Bruchdehnung und/oder die Bruchspannung sein.

Die erfindungsgemäßen Sekundärschaumstoffkörper können allgemein auch auf die gewünschten Lastbereiche besonders genau eingestellt werden, sind extrem alterungsstabil und langzeitbelastbar und können besonders niedrige Eigenfrequenzen aufweisen. Ferner weisen sie eine extreme Dauerelastizität selbst unter Tonnenlasten auf.

Vorzugsweise wird im Rahmen der Erfindung das Klebemittel in Verbindung mit einem Pressvorgang zum Abbinden gebracht, um den Sekundärschaumstoffkörper zu erzeugen, wodurch in dem Pressvorgang etwaige Toleranzen des Ausgangsprimärschaumstoffes weiter korrigiert bzw. ausgeglichen werden können. Der Pressvorgang kann zeitweise oder während der gesamten Dauer des Abbindevorganges durchgeführt werden, der Pressdruck kann jeweils zumindest im Wesentlichen konstant sein oder während der Abbindezeit variieren, insbesondere mit zunehmender Abbindezeit abnehmen oder zunehmen. Der Pressdruck kann uniaxial oder multiaxial erfolgen, beispielsweise aus gegenüberliegenden Richtungen. Der Pressdruck kann derart gewählt sein, dass der in Herstellung befindliche Sekundärschaumstoffkörper um ≥ 5-8 Vol.-% komprimiert wird, gegebenenfalls ≥ 10-15 Vol.-% oder ≥ 20-25 Vol.-% oder besonders bevorzugt ≥ 30 bis 40% bezogen auf das Gesamtvolumen an eingesetztem Primärschaumstoffkörper erfolgt (die Volumina und Raumgewichte beziehen sich jeweils auf die unzerkleinerten Primärschaumstoffkörper, sind also unabhängig von dem Schüttgewicht der Primärschaumstoffmaterialien). Die Kompression bei dem Pressvorgang kann auch ≤ 20-25 Vol.-%. ≤ 10-15 Vol.-% betragen. Die Kompression oder Verpressung kann derart erfolgen, dass das Raumgewicht des Sekundärschaumstoffkörper um ≥ 10-15%, vorzugsweise ≥ 20 bis 25% oder besonders bevorzugt ≥ 30 bis 40% größer als das Raumgewicht des eingesetzten Primärschaumstoffkörpers oder das mittlere Raumgewicht (bezogen auf Gewichtsanteile) der eingesetzten Primärschaumstoffkörper ist. Die Kompression kann somit während des Abbindevorgangs des Klebemittels erfolgen.

Zur Herstellung eines Sekundärschaumstoffkörpers nach einer der beiden oben genannten Alternativen mit gegebenen Abmessungen können zumindest eine oder mehrere sortenreine Fraktionen von Flocken aus einem Primärschaumstoffkörper bereitgestellt werden, wobei vorzugsweise der gesamte Anteil einer jeweiligen Fraktion $f_1$ bis $f_x$ vorzugsweise aus Primärschaumstoffkörpern einer Charge hergestellt wird. Im Rahmen der Erfindung kann jeweils eine sortenreine Flockenfraktion $f_1$ bis $f_x$ (oder nur eine einzige solche Fraktion) aus mehreren vorgegebenen Primärschaumstoffkörpern hergestellt werden, sofern die physikalische Eigenschaften, insbesondere deren dynamische Eigenschaften, Federkonstante, Kompressibilität, Kriecheigenschaften und/oder Raumgewicht ausreichend genau übereinstimmen und vorzugsweise zumindest stichprobenartig vorbekannt sind. Hierzu können die physikalischen Eigenschaften vor der Zerkleinerung der Primärschaumstoffkörper in Flocken bestimmt werden, so dass diese vorzugsweise nur bei ausreichend enger Übereinstimmung der einzelnen Parameter zusammen weiterverarbeitet werden, um die Sortenreinheit der Fraktion zu garantieren.

Die Toleranzen einer, mehrerer oder sämtlicher Parameter der Gruppe Kompressibilität, Federkonstante (Federrate), Raumgewicht können ≤ 2-3% oder ≤ 0,75-1% oder ≤ 0,3-0,5% oder ≤ 0,1-0,2% (jeweils Absolutprozent) vom jeweiligen Sollwert betragen. Die angegebenen Toleranzen können somit für die Parameter Kompressibilität und/oder Federkonstante und/oder Raumgewicht gelten. Entsprechendes gilt alternativ oder zusätzlich auch für die dynamischen Eigenschaften, beispielsweise die dynamische Steifigkeit [N/mm$^3$] bei gegebener Pressung und Frequenz, z.B. für Pressungen im Bereich von 0,01- 0,025 N/mm$^2$ und 5-40 Hz, die nach DIN 53513 (z.B. Probenkörper 300mmx300 mmx25mm) bestimmt werden können, oder entsprechend für die Steifigkeit im dauerelastischen Bereich.

Die Sekundärschaumstoffkörper können aus Flocken von zumindest annähernd gleicher Größe hergestellt werden, ohne dass dies immer zwingend notwendig ist. Beispielsweise können hierbei 68,3 Gew.-% oder 95,4 Gew.-% der Flocken eine Abweichung von ≤ ± 20-30% oder ≤ ± 15-10% oder ≤ ± 5% vom mittleren Durchmesser der jeweiligen Fraktion abweichen. Entsprechendes gilt für eine Abweichung des Flockengewichtes vom mittleren Flockengewicht.

Gegebenenfalls können auch zielgerichtet unterschiedliche Fraktionen von Flocken hergestellt werden, wobei die einzelnen Fraktionen jeweils aus Flocken von zumindest im Wesentlichen gleicher Größe und/oder Form bestehen und zur Herstellung des Sekundärschaumstoffkörpers Flocken verschiedener Fraktionen mit jeweils unterschiedlicher Flockengröße und/oder Form miteinander zu einer Mischfraktion vermischt werden. Unterschiedliche Fraktionen von Flocken können hierbei jeweils mittlere Durchmesser aufweisen, die sich um mehr als das zwei- bis dreifache, mehr als das vier- bis sechsfache oder mehr als das acht- bis zehnfache der Summe der Standardabweichungen der jeweiligen Fraktionen unterscheiden. Dies kann jeweils für mehrere oder für sämtliche Fraktionen gelten, aus welchen der Sekundärschaumstoffkörper hergestellt wird.

Der Flockendurchmesser der einzelnen Fraktionen kann den jeweiligen Anforderungen entsprechend gewählt werden. Allgemein kann der Flockendurchmesser oder der mittlere Flockendurchmesser ≥ 1-2 mm, ≥ 3-7 mm, ≥ 10-15 mm oder ≥ 20 mm betragen, was für einige oder sämtliche Fraktionen, aus welchen der Sekundärschaumstoffkörper hergestellt wird, gelten kann. Der Flockendurchmesser oder mittlere Flockendurchmesser einiger oder sämtlicher der Fraktionen kann ≤ 30-50 mm, ≤ 15-20 mm oder ≤ 5-10 mm sein.

Allgemein können zur Herstellung der Sekundärschaumstoffkörper auch sortenreine Fraktionen von Flocken unterschiedlicher Flockengestalt eingesetzt werden. Die Flocken einzelner oder sämtlicher der zur Herstellung der Sekundärschaumstoffkörper eingesetzten Fraktionen können zumindest im Wesentlichen isometrisch aber auch flächig oder anders geformt sein.

Insgesamt können somit Flocken unterschiedlicher Größe und/oder Formgestalt aus Primärschaumstoffkörpern unterschiedlicher physikalischer Eigenschaften getrennt voneinander sortenrein hergestellt werden, wobei die einzelnen Fraktionen in vorzugsweise definierten Gewichts- und/oder Volumenanteilen miteinander vermischt werden, um wie oben beschrieben einen Sekundärschaumstoffkörper herzustellen.

Dadurch, dass Flocken aus einzelnen vordefinierten Fraktionen zusammen vermischt werden können, können zum Einen hinsichtlich ihrer Dimensionen und/oder physikalischen Eigenschaften besonders genau definierte Sekundärschaumstoffkörper hergestellt werden, andererseits aber auch Sekundärschaumstoffkörper mit einer sehr großen Variationsbreite an Dimensionen und/oder physikalischen Eigenschaften mit jeweils besonders engen Toleranzen.

Allgemein können die Sekundärschaumstoffkörper aus nicht mehr als zwei bis drei oder nicht mehr als vier bis fünf unterschiedlichen jeweils in sich sortenreinen Flockenfraktionen hergestellt werden, die sich hinsichtlich der physikalischen Eigenschaften und/oder gegebenenfalls der Größe der Flocken unterscheiden. $n_x$ kann somit vorzugsweise die obigen Werte annehmen, gegebenenfalls kann $n_x$ aber auch größer 5 sein.

Zumindest eine mehrere oder sämtliche Fraktionen können jeweils einen Mindestanteil von ≥ 1-2%, ≥ 3-5% oder ≥ 10-20% (jeweils Vol.- oder Gew.-%) an der Gesamtmischfraktion ausmachen. Die einzelnen Fraktionen können jeweils auch einen Höchstanteil von ≤ 98-95%, ≤ 80-90%, ≤ 60-75%, ≤ 40-50%, ≤ 20-30% der ≤ 10-15% (jeweils Vol.- oder Gew.-%) an der Gesamtmischfraktion ausmachen.

Als besonderer Vorteil des erfindungsgemäßen Verfahrens wird ermöglicht, dass die Flocken zur Herstellung des Sekundärschaumstoffkörpers mit einem oder mehreren Füllstoffen vermischt werden. Das vorzugsweise homogenisierte Gemisch von Flocken und Füllstoffen kann dann anschließend mit mindestens einem Klebemittel vorzugsweise homogen vermischt werden, so dass unter Abbindung des Klebemittels Sekundärschaumstoffkörper mit vorzugsweise homogener Verteilung der Füllstoffe in dem Sekundärschaumstoffkörper herstellbar sind. Durch die Füllstoffe können die physikalischen Eigenschaften der Sekundärschaumstoffkörper an unterschiedlichste Erfordernisse angepasst werden. Durch das erfindungsgemäße Verfahren ist insbesondere eine besonders homogene Verteilung der Füllstoffe in dem Sekundärschaumstoffkörper möglich, da ein Absinken oder Entmischen von Füllstoffpartikeln während des Aufschäumvorganges und/oder des Aushärtens des Polymerschaums vermieden werden kann. Werden unterschiedliche Flockenfraktionen eingesetzt, so können diese vor oder zusammen mit den Füllstoffen homogenisiert werden.

Als Füllstoffe können in dem erfindungsgemäßen Verfahren beispielsweise Kork und/oder Elastomere wie Gummi (natürlicher oder synthetischer Kautschuk), insbesondere SBR-, NBR- und/oder HNBR-Gummi eingesetzt werden. Der eingesetzte Gummi kann insbesondere eine Härte im Bereich von 15-100 Shore A, 30-90 Shore A, 40-80 Shore A oder im Bereich von 50-70 Shore A aufweisen. Alternativ oder zusätzlich können auch mineralische Füllstoffe, Kunststoffe, vorzugsweise nichtgeschäumte aber gegebenenfalls auch geschäumte, Kunststoffe oder andere Polymere und/oder Faserstoffe (beispielsweise Mineral-, Glas-, Kohlenstoff- und/oder Kunststofffasern) eingesetzt werden.

Bezogen auf den Sekundärschaumstoffkörper können die Füllstoffe insgesamt in einem Anteil von ≥ 1-2%, ≥ 3-5%, ≥ 10-20%, ≥ 25-40%, ≥ 50-75% oder ≥ 80-90% bzw. ≥ 95-98% eingesetzt werden. Gegebenenfalls kann der Füllstoffanteil auch auf ≤ 40-50%, ≤ 25-30%, ≤ 15-20% oder ≤ 5-10%, gegebenenfalls auch ≤ 2-3% beschränkt sein. Gegebenenfalls kann der Sekundärschaumstoffkörper Gummi und/oder Kork in einem Anteil von ≥ 1-2%, ≥ 3-5%, ≥ 10-20%, ≥ 25-40%, ≥ 50-75% oder ≥ 80-90% bzw. ≥ 95-98% aufweisen. Der Anteil von Gummi und/oder Kork kann auch ≤ 40-50%, ≤ 25-30%, ≤ 15-20% oder ≤ 5-10%, gegebenenfalls auch ≤ 2-3% sein. Die Prozentangaben beziehen sich jeweils wahlweise auf Volumen- oder Gewichtsprozent.

Vorzugsweise ist der Füllstoff, insbesondere ein elastischer Füllstoff wie Kork und/oder Gummi oder ein anderer Kunststoff, in einem Volumenanteil enthalten, so dass sich beim maximal komprimierten Formkörper die Füllstoffe eine durchgehende, zusammenhängende Schicht bilden. Diese kann eine Stärke von $\geq$ 1-2 mm, $\geq$ 3-5 mm oder $\geq$ 10 mm aufweisen. Die Empfindlichkeit der Schaumstoffkörper bei Belastungsspitzen kann hierdurch deutlich vermindert werden. Auch bei großen Belastungen werden so lokale Überbelastungen vermieden, z.B. wenn beim Aufstellen einer Maschine diese verkantet aufgesetzt wird und auf den Untergrund durchschlägt, so dass irreversible Beschädigungen des Schaumstoffkörpers verhindert werden.

Es versteht sich, dass die eingesetzten Füllstoffe jeweils vorbestimmte physikalische Eigenschaften und/oder jeweils eine vorbestimmte Partikelgröße aufweisen können. Insbesondere können die Füllstoffe eine größere Dichte aufweisen als das Schaumstoffflockenmaterial, ohne weiteres $\geq$10-20% oder $\geq$ 50-100% oder $\geq$ 200-300% der Dichte derselben. Gegebenenfalls können die zugegebenen Partikel auch in etwa dieselbe oder eine geringere Dichte als diese aufweisen, z.B. wenn Schaumstoffpartikel zugegeben werden, z.B. aus Polystyrol oder anderen nur mit Schäumungshilfsmitteln schäumbaren Kunststoffen. Die eingesetzten Schaumstoffe zur Herstellung der Primärschaumstoffkörper können somit insbesondere Materialien sein, die zum Teil selbst aufschäumen, z.B. unter Polykondensation wie Polyurethane.

Gegebenenfalls können jedoch jeweils auch Sekundärschaumstoffkörper mit definierten räumlich inhomogenen Verteilungen an Flocken unterschiedlicher sortenreiner Fraktionen und/oder von Füllstoffen hergestellt werden, beispielsweise indem die Füllstoffe in bestimmten Zonen des Sekundärschaumstoffkörpers angereichert werden. Die Verteilung der Füllstoffe innerhalb der Sekundärschaumstoffkörper ist bei dem erfindungsgemäßen Verfahren jedoch exakt und auf praktisch beliebige Weise steuerbar und kontrollierbar, wohingegen eine Absinken von Füllstoffpartikein bei der Herstellung herkömmlicher Schaumstoffkörper zu einem nicht definierten Konzentrationsgradienten über die Höhe der Schaumstoffkörper führen würde.

Vorzugsweise bestehen einer, mehrere oder sämtliche der Primärschaumstoffkörper aus welchen die sortenreinen Flockenfraktionen hergestellt werden, die zu einer gleichmäßigen Mischfraktion vermischt werden, aus Polyurethanschaum. Gegebenenfalls sind auch andere Schaumstoffe aus polymerem Material bzw. andere geschäumte Kunststoffe einsetzbar, gegebenenfalls können diese auch zusammen mit mindestens einer oder mehreren Flockenfraktionen aus Polyurethanschaum eingesetzt werden. Der zur Herstellung der Primärschaumstoffkörper und/oder als Klebemittel verwendete Schaum kann insbesondere reiner Polyurethanschaum sein.

Das Klebemittel zur Verbindung der einzelnen Flocken kann ein Kunststoff, insbesondere ein Polymerschaum sein, besonders bevorzugt ein Polyurethanschaum. Der Kunststoff bzw. Polyurethanschaum kann zumindest im Wesentlichen aus dem gleichen Material bestehen, wie zumindest einer der zur Herstellung der Flocken verwendeten Primärschaumstoffkörper. Es versteht sich, dass unterschiedliche Polyurethanschäume oder allgemein unterschiedliche Polymerschäume als Klebemittel eingesetzt werden können, um die erfindungsgemäßen Sekundärschaumstoffkörper herzustellen. Weiterhin kann der als Klebemittel eingesetzte Polymerschaum, insbesondere Polyurethanschaum, unter zumindest im Wesentlichen denselben Bedingungen verschäumt werden, wie diese zur Herstellung eines der Primärschaumstoffkörpers, insbesondere eines solchen praktisch gleicher Zusammensetzung, verwendet wurden, beispielsweise der gleichen Zudosierung von Schäumungsgas und dergleichen, so dass in dem hergestellten Sekundärschaumstoffkörper zwischen Klebemittelphase und Primärschaumstoffflocken der jeweiligen Fraktion praktisch nicht mehr unterschieden werden kann. Gegebenenfalls kann der als Klebemittel eingesetzte Polymerschaum auch eine andere Zusammensetzung aufweisen und/oder unter anderen Bedingungen aufgeschäumt und/oder zum Abbinden gebracht werden, als sämtliche der eingesetzten Primärschaumstofffraktionen. Das Klebemittel kann in einem derartigen Volumenverhältnis zu dem Material der mindestens einen oder mehreren Primärschaumstofffraktionen (und gegebenenfalls auch der Füllstoffe) eingesetzt sein, dass sämtliche Primärschaumstoffflocken und/oder Füllstoffpartikel oberflächlich vollständig mit Klebemittel versehen werden, also oberflächlich praktisch keine klebemittelfreien Bereiche der Flocken und/oder Füllstoffpartikel vorliegen. Gegebenenfalls kann dass Klebemittel gegenüber einem solchen Verhältnis jedoch auch im Unterschuss eingesetzt werden.

Das Klebemittel, insbesondere in Form als Polymerschaum, kann in einem Verhältnis von 1-50 Gew.-%, vorzugsweise 2-25 oder bis 30 oder 3-20 Gew.-%, besonders bevorzugt 5-15 Gew.-% in Bezug auf das Gesamtgewicht aus Flocken und Klebemittel oder in Bezug auf das Gesamtgewicht des Sekundärschaumstoffkörpers eingesetzt werden.

Das Klebemittel und/oder das Primärschaumstoffkörpermaterial (zumindest das der Hauptfraktion oder sämtlicher Primärschaumstofffraktionen, nach Volumen- oder Gewichtsanteilen) können insbesondere duroplastische Kunststoffmaterialien sein. Die Kunststoffmaterialen können kondensationspolymerisierend sein. Das ausgehärtete Klebemittel und/oder das Primärschaumstoffkörpermaterial (zumindest das der Hauptfraktion nach Volumen- oder Gewichtsanteilen) können insbesondere elastische, insbesondere weichelastische, Kunststoffmaterialien sein. Der Sekundärschaumstoffkörper und/oder die Flocken zu dessen Herstellung können reversibel ohne Beschädigung deren Zellstruktur um $\geq$5-10 Vol.-%, $\geq$ 15-20 Vol.-%, $\geq$25-30 Vol.-% oder $\geq$ 50 Vol.-% komprimierbar sein, gegebenenfalls auch bei dynamischem Lastwechsel.

Die erfindungsgemäß einzusetzenden Primärschaumstoffkörper zur Herstellung der Schaumstoffflokken können jeweils einen offenzelligen, geschlossenzelligen oder gemischtzelligen, d. h. teilweise offen und teilweise geschlossenzelligen Schaum darstellen.

Die erfindungsgemäß hergestellten Sekundärschaumstoffkörper können ein Raumgewicht im Bereich von 60-1.200 kg/cbm oder 90-1.000 kg/cbm aufweisen, beispielsweise im Bereich von 100-920 kg/cbm oder im Bereich von 150-800 kg/cbm, das Raumgewicht kann auch bis 400 kg/cbm, bis 500 kg/cbm oder bis 700 kg/cbm betragen. Durch Verwendung von nur zwei Flockenfraktionen unterschiedlicher Dichte können somit sämtliche derzeit üblichen und notwendigen Dichten der Sekundärschaumstoffkörper hergestellt werden. Die Raumgewichte können jeweils durch eine geeignete Verpressung der Flocken während der Abbindung des Klebemittels erzielt werden. Hierdurch sind insgesamt niedrige Eigenfrequenzen bei hoher Tragfähigkeit bzw. statischer Dauerlastbeständigkeit der Sekundärschaumstoffkörper erzielbar.

Die Schaumstoffkörper können durch das erfindungsgemäße Verfahren in Abmessungen hergestellt werden, wie sie bei bekannten Verfahren, insbesondere durch Extrusion oder Ausschäumen, nicht oder nur mit unakzeptablen Toleranzen herstellbar sind. Dies betrifft sowohl kleinere als auch größere Abmessungen. So können die erfindungsgemäßen Schaumstoffkörper mit Abmessungen in deren kleinster Dimension, z.B. Höhe, von ≤ 3-5 mm oder ≥ 100-300 mm oder ≥ 500-1000 mm mit den beschriebenen engen Toleranzen hergestellt werden, wobei auch die Abmessungen selber diese sehr engen Toleranzen aufweisen können.

Zur Herstellung des Sekundärschaumstoffkörpers kann die gewünschte Zusammensetzung aus verschiedenen Primärschaumstoffflocken, gegebenenfalls unter Vorhomogenisierung oder durch eine Homogenisierung in Gegenwart oder unter Zufügung des Klebemittels, homogenisiert werden. Diese Homogenisierung kann bei ausreichend hoher Rotationsgeschwindigkeiten durchgeführt werden, so dass ein Entmischen von Primärpartikeln unterschiedlicher Fraktionen, insbesondere unterschiedlicher Zusammensetzungen, verhindert wird. Gegebenenfalls kann die Vermischung mit dem Klebemittel unter Zusatz von Wasser erfolgen. Die derart hergestellte homogene Mischphase kann in einer geeigneten Form, insbesondere einer allseitig geschlossenen Form zum Abbinden gebracht werden. Hierbei können allgemein auch durch Einstellung eines bestimmten Pressdruckes beim Formungsvorgang das Raumgewicht und die anderen Eigenschaften des resultierenden Schaumstoffkörpers noch in gewissen Grenzen eingestellt bzw. justiert werden, so dass die Toleranzen dieser Werte praktisch gegen Null gehen können. Dies gilt für beide erfindungsgemäße Alternativen, auch in Gegenwart von Füllstoffen. Gegebenenfalls kann die Form eine Zylinderform mit Kern darstellen, so dass nach Abbinden des Klebemittels ein Sekundärschaumstoffzylinder mit zentriertem Kern erzeugt wird. Durch Rotation des Zylinders gegenüber einem Abschälmesser, wobei der Zylinder rotieren kann, können Bahnen gewünschter Materialstärke und/oder gewünschter Länge von dem Schaumstoffzylinder abgeschält werden. Es versteht sich, dass beispielsweise auch Schaumstoffblöcke beliebiger Dimension und Form hergestellt werden können, aus welchen die gewünschten Schaumstoffartikel herausgeschnitten werden können, beispielsweise auch in Form von Platten.

Allgemein kann bei dem erfindungsgemäßen Verfahren die Zerflockung der Primärschaumstoffkörper auch bereits unmittelbar nach deren Herstellung erfolgen, beispielsweise in derselben Fertigungsstraße. Gegebenenfalls kann sich auch die Herstellung der Sekundärschaumstoffkörper hier unmittelbar anschließen.

Weiterhin betrifft die Erfindung einen Schaumstoffkörper, der nach dem erfindungsgemäßen Verfahren hergestellt ist, einschließlich aus diesem Schaumstoffkörper hergestellte Schaumstoffartikel, die beispielsweise durch Zerschneiden oder Konfektionierung des Sekundärschaumstoffkörpers erhalten werden.

Die erfindungsgemäß hergestellten Schaumstoffkörper bzw. -artikel sind besonders vorteilhaft einsetzbar als Dämpfungselemente, beispielsweise zur Schwingungsdämpfung oder zum Erschütterungsschutz bzw. zur Körperschalldämpfung, als Dämpfungselemente zur Gebäudeentkopplung von dem jeweiligen Untergrund, wobei das jeweilige Gebäude oder Bauwerk auf dem aus mindestens einem Schaumstoffkörper oder -artikel hergestelltem Dämpfungselement als Unterkonstruktion errichtet werden kann, was sowohl im Hochals auch im Tiefbau gilt. Die Schaumstoffkörper bzw. -artikel können hierbei auch allgemein unter einem Estrich oder einer anderen Tragschicht als Dämpfung eingesetzt werden. Ein weiteres besonders bevorzugtes Anwendungsgebiet ist die Verwendung als Transportwegeunterbaudämpfungselement, beispielsweise für Schienenverkehrswege, um einen Transportweg wie z.B. Gleisabschnitt von dem Untergrund schwingungstechnisch zu entkoppeln oder im Verkehrswegebau als Unterbau für Straßen, Brücken, Tunnel oder Fundamente. Ein weiteres Anwendungsgebiet ist die Verwendung als Dämpfungselemente im Maschinenbau, beispielsweise als Aktivisolierung von Maschinen zur schwingungstechnischen Isolierung der Maschinen von deren Unterkonstruktion, Aufhängung oder Fundament. Derartige Maschinenfundamente können beispielsweise für Aufzüge, Pumpen, Notstromaggregate, Kälteanlagen oder sonstige mechanisch arbeitende Anlagen eingesetzt werden. Insbesondere auch bei Verwendung der erfindungsgemäßen Schaumstoffkörper mit Füllstoffen als Unterbauelemente für Maschinen wird in wesentlichem Umfang vermieden, dass die Maschinen beim verkanteten Aufsetzen bis auf den konstruktiven Unterbau durchschlagen, was zu einer Beschädigung der Maschinen und dauerhaften Schädigung der Dämpfungseigenschaften der Schaumstoffdämpfungselemente führen kann. Weiterhin können die erfindungsgemäßen Schaumstoffkörper oder -artikel zur Trittschall- oder Körperschallisolierung eingesetzt werden, beispielsweise bei hoch belasteten Böden wie Lager-, Betriebs- oder Fußböden.

Die erfindungsgemäß hergestellten Sekundärschaumstoffkörper können jeweils eine profilierte Oberfläche aufweisen, die den jeweiligen Bedingungen angepasst ist, beispielsweise die Festlegung des jeweils zu lagernden Körper oder Systems oder um die Dämpfungseigenschaften des Systems zu optimieren, beispielsweise in Form einer Wellenstruktur, Zickzackstruktur, Sägezahnstruktur, Rechteckstruktur oder dergleichen.

Die Erfindung wird nachfolgend anhand von Ausführungsbeispielen beispielhaft beschrieben.

Ausführungsbeispiel 1

Zur Herstellung eines Sekundärschaumstoffkörpers wird ein Primärschaumstoffkörper bereitgestellt, dessen physikalische Eigenschaften, insbesondere dynamische Eigenschaften, Federkonstante, Kompressibilität, Kriecheigenschaften und/oder Raumgewicht, definiert und gegebenenfalls experimentell bestimmt sind. Der Primärschaumstoffkörper wird dann unter Bildung einer sortenreinen Fraktion zu Schaumstoffflocken zerkleinert, deren mittlerer Durchmesser 2-5 mm betragen kann. Die Flocken können zumindest im Wesentlichen isometrisch sein. Der Primärschaumstoffkörper besteht vorzugsweise aus Polyurethanschaum.

Die Flocken werden anschließend mit einem Klebemittel in Form eines Kunststoffschaums, insbesondere Polyurethanschaums, vermengt, wobei der Klebemittelschaum zumindest im Wesentlichen die gleiche Zusammensetzung wie das Primärschaumstoffkörpermaterial aufweisen kann. Der Klebemittelschaum kann der hinsichtlich der Dichte oder anderer wesentlicher Eigenschaften mit dem Polymerschaum zur Herstellung des Primärschaumstoffkörpers übereinstimmen oder sich zielgerichtet von diesem unterscheiden.

Das Gemisch aus Primärschaumstoffflocken und Klebemittel kann in einem hochtourigen Mischer bei ausreichend hoher Geschwindigkeit homogenisiert werden. Die derart erhaltene Masse kann in geeignete Formen oder Hohlkörper gebracht werden, wobei das Material in den jeweiligen Formen zum Abbinden gebracht wird, vorzugsweise erfolgt das Abbinden des Klebemittels innerhalb der jeweiligen Form bzw. dem Hohlkörper. Der Hohlkörper kann eine zylindrische bzw. tonnenförmige Gestalt aufweisen und mit einem koaxial zur Zentralachse des Hohlkörpers verlaufenden Kern versehen sein. Nach Abbinden des Klebemittels kann der Sekundärschaumstoffkörper in bahnenartige Artikel zerteilt werden. Hierzu kann ein rakelartiges Schneidmesser koaxial zur Mittelachse des Schaumstoffkörpers angeordnet werden, so dass bei Anlegen des Messers an den Schaumstoffkörper unter Drehung desselben eine Bahn gleichmäßiger Dicke abgeschält wird. Gegebenenfalls können aus dieser Schaumstoffbahn weitere Schaumstoffartikel hergestellt werden.

Überraschenderweise weist der derart hergestellte Sekundärschaumstoffkörper bzw. die aus diesem herausgearbeitete Bahn in ihrer räumlichen Verteilung gleichmäßigere dynamische Eigenschaften, Federkonstante und Kompressibilität auf als der ursprüngliche Primärschaumstoffkörper.

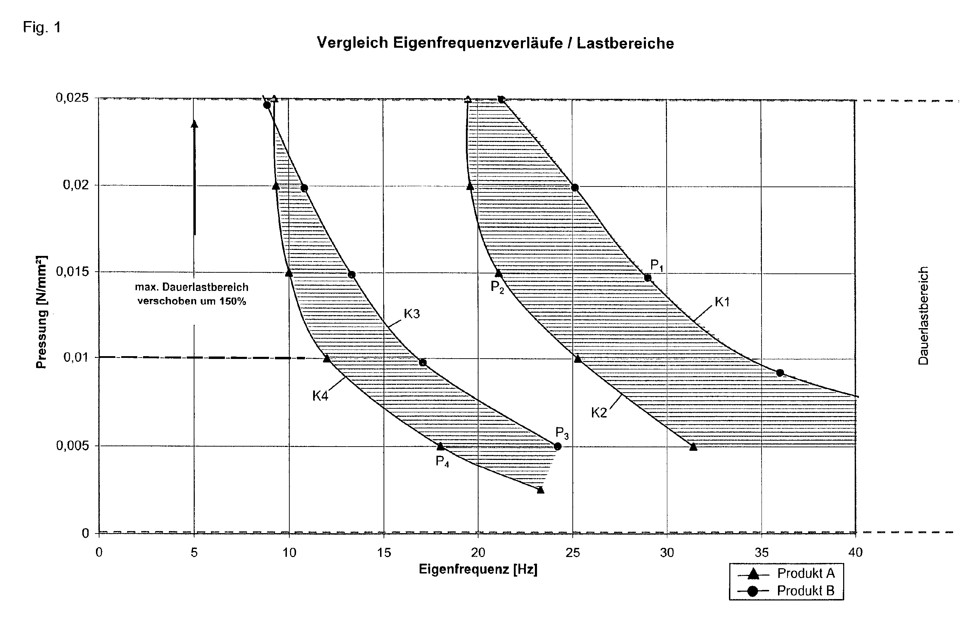

Figur 1 zeigt die Eigenfrequenzverläufe K1, K2 eines erfindungsgemäßen Sekundärschaumstoffkörpers (Produkt B), welcher aus einem Primärschaumstoffkörper (Produkt A) unter Verwendung eines Klebemittels hergestellt ist. Es liegen somit Flocken nur einer Fraktion F1 vor. Der Primärschaumstoffkörper besteht hierbei aus einem Polyurethanmaterial, als Klebemittel wird ein Polyurethanschaum eingesetzt, aus welchem auch der Primärschaumstoffkörper hergestellt ist. Primärschaumstoffflocken können beispielsweise einen Durchmesser von ca. 2 - 3 mm aufweisen. Die mit dem Klebemittel vermengten Primärschaumstoffflocken werden bei einem Druck während des Abbindens des Klebemittels verdichtet, so dass ausgehend von einem Primärschaumstoffmaterial mit einem Raumgewicht von 150 kg/m$^3$ ein Sekundärschaumstoffmaterial mit einem Raumgewicht von 220 kg/m$^3$ erhalten wird. Der Anteil an zugesetztem Polymerschaum zu den Primärschaumstoffflocken beträgt ca. 10 Gew.-%.

Die Eigenfrequenzen in Abhängigkeit von der Vorpressung wurden gemäß Referenzbedingungen nach DIN 53513 ermittelt, die jeweilige Vorpressung ergibt sich aus Figur 1 (Y-Achse), die aufgeprägte Schwingungsamplitude betrug 0,25mm. Die Probenstücke wiesen eine Größe von 300mm x 300mm x 12mm auf. Weiterhin sind die Eigenfrequenzverläufe K3, K4 des Primärschaumstoffkörpers und erfindungsgemäßen Sekundärschaumstoffkörper wie ansonsten oben beschrieben mit einer Schichtdicke von 48mm dargestellt. Mit zunehmender Schichtdicke nimmt die Eigenfrequenz der jeweiligen Probenkörper ab, in erster Näherung mit zunehmender Schichtdicke um den Faktor der Wurzel der Schichtdickenzunahme, d. h. bei doppelter Schichtdicke ist die eine Frequenz um ca. den Faktor 1,4 verringert, was allgemein gelten kann.

Bei den erfindungsgemäßen Sekundärschaumstoffkörpern ist der Dauerlastbereich zu höheren Lastwerten hin verschoben, bei dem eingesetzten Primärschaumstoffkörper liegt der Dauerlastbereich bei 0,01 N/mm$^2$, bei dem erfindungsgemäßen Sekundärschaumstoffkörper bei 0,025 N/mm$^2$. Der Dauerlastbereich ergibt sich aus der Tragfähigkeit des Schaumstoffmaterials.

Überraschenderweise sind die Eigenfrequenzen der erfindungsgemäße Sekundärschaumstoffkörper bei einer Schichtdicke von 12mm und von 48mm bei Vorpressungen < 0,025 N/mm$^2$, welche dem maximalen Dauerlastbereich der erfindungsgemäßen Sekundärschaumstoffkörper entsprechen, gegenüber dem Primärschaumstoffkörper zu niedrigeren Eigenfrequenzen verschoben. Der Dauerlastbereich der Primär- und Sekundärschaumstoffkörper nach Figur 1 liegt somit im Bereich von 0,005 bis 0,25 N/mm$^2$.

Bei einer Schichtdicke von 12 mm liegen bei niedrigen Pressungen während der Eigenfrequenzbestimmung die Eigenfrequenzen der erfindungsgemäßen Sekundärschaumstoffkörper bei einer Pressung von 0,2 N/mm$^2$ um ca. 5 Hz, bei einer Pressung von 0,01 N/mm$^2$ um mehr als 10 Hz zu niedrigeren Frequenzen verschoben. Bei einer Schichtdicke von 48mm der Sekundärschaumstoffkörper ist bei einer Pressung von 0,02 N/mm$^2$ die Eigenfrequenz um ca. 2 Hz zu niedrigeren Frequenzen verschoben, bei einer Pressung von 0,01 N/mm$^2$ um ca. 5 Hz. Es ist somit im Anwendungsbereich bis zur statischen Belastungsgrenze die Eigenfrequenz des erfindungsgemäßen Sekundärschaumstoffkörpers niedriger als die des Primärschaumstoffkörpers ist.

Allgemein kann somit durch Vermischen von Primärschaumstoffflocken mit einem Klebemittel und Herstellen eines Verbundes der Schaumstoffflocken und durch anschließendes Verpressen auf ein Raumgewicht, welches höher als das ursprüngliche Raumgewicht des Primärschaumstoffkörpers ist, der Eigenfrequenzverlauf in Richtung auf niedrigere Eigenfrequenzen verschoben und somit für die erfindungsgemäßen Anwendungsfälle positiv beeinflusst werden, wobei die hohen Tragfähigkeiten des Primärschaumstoffmaterials mit vergleichsweise hohen Zellwandstärken ausgenutzt werden kann.

Allgemein ist es somit oftmals der Fall, dass die tiefste Eigenfrequenz eines homogenen Primärschaumstoffkörpers oberhalb des statischen Dauerlastbereichs liegt und somit nicht für eine Auslegung des elastischen Lagers herangezogen werden darf. Durch Zugabe einer härteren Komponente eines Primärschaumstoffkörpers einer weiteren Fraktion oder durch Verdichtung während der Sekundärschaumstoffherstellung kann der optimale bzw. tiefste Punkt der Eigenfrequenz der weichen Komponente bzw. Fraktion ausgenutzt werden, da durch das erfindungsgemäße Verfahren der Dauerlastbereich zu höheren Lastbereichen verschoben werden kann, was maßgeblich durch die Vorpressung während der Abbindung des Klebemittels beeinflussbar ist. Gleichzeitig verhindert hierbei die härtere Komponente des Primärschaumstoffmaterials eine Überbelastung des Gesamtmaterials.

Ausführungsbeispiel 2

In Abwandlung des Verfahrens nach Ausführungsbeispiel 1 wird ein Sekundärschaumstoffkörper aus zwei unterschiedlichen jeweils in sich sortenreinen Fraktionen aus Schaumstoffflocken hergestellt. Schaumstoffflocken beider Fraktionen wurden jeweils durch Zerteilung eines homogenen Primärschaumstoffkörpers hergestellt, wobei zur Herstellung der Fraktion jeweils nur ein Primärschaumstoffkörper eingesetzt wurde oder die physikalischen Eigenschaften der Schaumstoffkörper zuvor bestimmt wurden.

Der Durchmesser der Flocken der Fraktionen $f_1$ und $f_2$ kann nach dem Ausführungsbeispiel im Wesentlichen gleich sein, beispielsweise ca. 3 mm, gegebenenfalls können die Flocken der beiden Fraktionen auch unterschiedliche mittlere Durchmesser aufweisen.

Flocken beider Fraktionen $f_1$ und $f_2$ wurden in einem Gewichtsverhältnis von 50:50 miteinander in einem hochtourigen Mischer bei ausreichenden Drehzahlen vorgemischt und anschließend mit einem Polyurethanschaum als Klebemittel homogen vermengt, beispielsweise bei gleicher Tourenzahl des Mischers. Die beiden Fraktionen $f_1$ und $f_2$ bestehen ebenfalls aus Polyurethanschaum. Das Klebemittel kann im Wesentlichen die gleiche Zusammensetzung aufweisen wie einer der Fraktion $f_1$ oder $f_2$ oder auch eine von beiden Faktionen unterschiedliche Zusammensetzung.

Die Herstellung des Sekundärschaumstoffkörpers erfolgt im Übrigen wie im Ausführungsbeispiel 1.

Ausführungsbeispiel 3

In Abwandlung des Ausführungsbeispiels 1 wird zu der sortenreinen Flockenfraktion $f_1$ ein Füllstoff in Form eines Gummigranulats zugefügt und im Mischer homogenisiert. Das Gummimaterial kann ein NBR-Gummi mit einer Härte von ca. 50 Shore A sein. Die Gummipartikel können einen Durchmesser von ca. 1 mm aufweisen. Zu der vorhomogenisierten Mischung aus Primärschaumstoffflocken und Gummipartikeln kann ein Klebemittel in Form eines Polyurethanschaums zugefügt werden, wobei wie unter Ausführungsbeispiel 1 beschrieben ein Sekundärschaumstoffkörper hergestellt wird.

**Patentansprüche**

1. Verfahren zur Herstellung von Hochleistungsschaumstoffkörpern, **dadurch gekennzeichnet, dass** ein homogener Primärschaumstoffkörper unter Bildung einer sortenreinen Fraktion zu Schaumstoffflocken zerkleinert wird,
dass die Flocken einer aus dem Primärschaumstoffkörper erhaltenen sortenreinen Fraktion mit einem Klebemittel vermengt werden,
dass das Klebemittel unter Erzeugung eines Sekundärschaumstoffkörpers zum Abbinden gebracht wird,
und dass gegebenenfalls der Sekundärschaumstoffkörper unter Bildung von Schaumstoffartikeln zerteilt wird.

2. Verfahren nach Anspruch 1, **dadurch gekennzeichnet, dass** die Vermengung und Abbindung des Klebemittels derart erfolgt, dass bei einer Vorlastpressung des Sekundärschaumstoffkörpers von 0,005 - 0,8 N/mm$^2$ die Eigenfrequenz des Systems aus Vorlast und Sekundärschaumstoffkörper unter Referenzbedingungen kleiner ist als die Eigenfrequenz des Systems mit dem nur einen Primärschaumstoffmaterial.

**3.** Verfahren zur Herstellung von Hochleistungsschaumstoffkörpern, **dadurch gekennzeichnet, dass** mehrere jeweils homogene Primärschaum-stoffkörper $n_1$ bis $n_x$ mit unterschiedlichen physikalischen Eigenschaften getrennt voneinander unter Bildung einer Anzahl $n_x$ sortenreiner Fraktionen F1 bis Fx zu Schaumstoffflocken zerkleinert werden, dass die Flocken unterschiedlicher Fraktionen F1 bis Fx in einem vordefinierten Verhältnis miteinander zu einer gleichmäßigen Mischfraktion vermischt werden,
dass die Flocken der Mischfraktion mit einem Klebemittel derart vermengt und das Klebemittel unter Erzeugung eines Sekundärschaumstoffkörpers derart zum Abbinden gebracht wird, dass bei einer Vorlastpressung des Sekundärschaumstoffkörpers von 0,005 - 0,8 N/mm$^2$ die Eigenfrequenz des Systems aus Vorlast und Sekundärschaumstoffkörper unter Referenzbedingungen kleiner ist als die Eigenfrequenz des Systems mit Primärschaumstoffkörpern n1, aus denen die Fraktion F1 erzeugt wird, wobei die Fraktionen F1 bis Fx mit zunehmendem Index x in zunehmend geringerem Volumen- und/oder Gewichtsanteil in dem Sekundärschaumstoffkörper enthalten sind,
und dass gegebenenfalls der Sekundärschaumstoffkörper unter Bildung von Schaumstoffartikeln zerteilt wird.

**4.** Verfahren nach Anspruch 3, **dadurch gekennzeichnet, dass** die Vermengung und Abbindung des Klebemittels derart erfolgt, dass bei einer Vorlastpressung des Sekundärschaumstoffkörpers von 0,005 - 0,8 N/mm$^2$ die Eigenfrequenz des Systems aus Vorlast und Sekundärschaumstoffkörpers unter Referenzbedingungen kleiner ist als die Eigenfrequenz des Systems mit zumindest den Primärschaumstoffkörpern n1 und n2 der Fraktion F1 und F2.

**5.** Verfahren nach einem der Ansprüche 1 bis 4, **dadurch gekennzeichnet, dass** die Vermengung und Abbindung des Klebemittels derart erfolgt, dass bei einer Vorlastpressung des Sekundärschaumstoffkörpers von 0,005 - 0,8 N/mm$^2$ die Eigenfrequenz des Systems aus Vorlast und Sekundärschaumstoffkörpers unter Referenzbedingungen um 1-2 Hz oder mehr niedriger als die Eigenfrequenz des Systems mit dem nur einen Primärschaumstoffkörpermaterial oder mit dem Primärschaumstoffmaterial der Fraktion F1 oder der Fraktionen F1 und F2 ist.

**6.** Verfahren nach einem der Ansprüche 1 bis 5, **dadurch gekennzeichnet, dass** die Vermengung und Abbindung des Klebemittels derart erfolgt, dass bei einer Vorlastpressung des Sekundärschaumstoffkörpers von 0,005 - 0,8 N/mm$^2$ die Eigenfrequenz des Systems aus Vorlast und Sekundärschaumstoffkörper unter Referenzbedingungen um mehr als 5 % niedriger als die Eigenfrequenz des Systems mit dem nur einen Primärschaumstoffkörpermaterial oder mit dem Primärschaumstoffmaterial der Fraktion F1 oder der Fraktionen F1 und F2 ist.

**7.** Verfahren nach einem Ansprüche 1 bis 6, **dadurch gekennzeichnet, dass** das Schaumstoffmaterial während des Abbindens des Klebemittels auf ein Raumgewicht komprimiert wird, welches um ≥ 10% höher als das Raumgewicht des nur einen Primärschaumstoffkörpers oder höher als das Raumgewicht des Primärschaumstoffkörpers der Fraktion F1 oder höher als das mittlere Raumgewicht der Primärschaumstoffkörper der Fraktionen F1 und F2 oder der Fraktionen F1 bis Fx eines aus mehreren Fraktionen bestehenden Sekundärschaumstoffkörpers ist.

**8.** Verfahren nach einem der Ansprüche 1 bis 7, **dadurch gekennzeichnet, dass** die Eigenfrequenz des Systems aus Vorlast und Sekundärschaumstoffkörper bei einer aufgezwungenen Amplitude von 0,25mm im Bereich von 4 bis 40 Hz liegt.

**9.** Verfahren nach einem der Ansprüche 1 bis 7, **dadurch gekennzeichnet, dass** der Sekundärschaumstoffkörper mit einer statischen Dauerlast oder Vorlast im Bereich von 0,075 - 0,25 N/mm$^2$ belastbar ist.

**10.** Verfahren nach einem der Ansprüche 1 bis 9, **dadurch gekennzeichnet, dass** die Flocken zur Herstellung des Sekundärschaumstoffkörpers mit einem oder mehreren Füllstoffen vermischt werden.

**11.** Verfahren nach einem der Ansprüche 1 bis 10, **dadurch gekennzeichnet, dass** das Klebemittel ein Polymerschaum ist.

**12.** Verfahren nach einem der Ansprüche 1 bis 11, **dadurch gekennzeichnet, dass** die eine oder mehrere Fraktionen der Flocken vermischt mit dem Klebemittel in eine Zylinderform zum Aushärten des Klebemittels gebracht werden und dass von dem ausgehärteten Schaumstoffzylinder unter Abwicklung desselben Bahnen geschnitten werden.

**13.** Hochleistungsschaumstoffkörper oder -artikel hergestellt nach einem Verfahren nach einem der Ansprüche 1 bis 12.

**14.** Hochleistungsschaumstoffkörper oder -artikel nach Anspruch 13, **dadurch gekennzeichnet, dass** der Füllstoff in einem derartigen Gehalt enthalten ist, dass bei maximal komprimierten Schaumstoffkörper die Füllstoffe eine durchgehende, zusammenhängende Schicht bilden.

**15.** Verwendung eines Hochleistungsschaumstoffkörpers oder -artikels nach Anspruch 13 oder 14 oder eines Hochleistungsschaumstoffkörpers hergestellt **dadurch**, dass mehrere jeweils homogene Primärschaumstoffkörper $n_1$ bis $n_x$ mit unterschiedlichen physikalischen Eigenschaften getrennt voneinander unter Bildung einer Anzahl $n_x$ sortenreiner Fraktionen F1 bis Fx zu Schaumstoffflocken zerkleinert werden, dass die Flocken unterschiedlicher Fraktionen F1 bis Fx in einem vordefinierten Verhältnis miteinander zu einer gleichmäßigen Mischfraktion vermischt werden, dass die Flocken der Mischfraktion mit einem Klebemittel vermengt und das Klebemittel unter Erzeugung eines Sekundärschaumstoffkörpers zum Abbinden gebracht wird, und dass gegebenenfalls der Sekundärschaumstoffkörper unter Bildung von Schaumstoffartikeln zerteilt wird, als Dämpfungselement.

**16.** Verwendung eines Hochleistungsschaumstoffkörpers oder -artikels nach Anspruch 15 als Gebäudeentkopplungselement, als Transportwegeunterbaudämpfungselement oder als Maschinenunterbaudämpfungselement.

EP 2 138 299 A2

Fig. 1

## Vergleich Eigenfrequenzverläufe / Lastbereiche